# EUROPEAN PATENT APPLICATION

(11) **EP 4 545 335 A1**
(43) Date of publication of application: **30.04.2025**
(21) Application number: 22957543.6
(22) Date of filing: 22.12.2022
(51) Int. Cl.: B60K 35/00, G02B 5/04, G03B 21/28

(54) **DISPLAY DEVICE FOR VEHICLE**

(30) Priority: 02.09.2022 KR 20220111681
(71) Applicant: LG Electronics Inc., Yeongdeungpo-gu Seoul 07336 (KR)
(72) Inventor: LEE, Sangyong, Seoul 06772 (KR); KIM, Moonyoung, Seoul 06772 (KR); THO, Gihoon, Seoul 06772 (KR)
(74) Representative: Vossius & Partner Patentanwälte Rechtsanwälte mbB
(86) International application number: PCT/KR2022/021121
(87) International publication number: WO 2024/048867

(57) **Abstract**

A display device for a vehicle comprises a display module having a display panel and a cover window disposed on one side of the display panel, and a drive mechanism for laying down the display module or standing the display module up, wherein the cover window may comprise: a total reflection area in which an image emitted from the display panel is totally reflected; and a transmission area in which the image emitted from the display panel is transmitted.

## Description

### TECHNICAL FIELD

The present invention relates to a display device for a vehicle.

### BACKGROUND ART

An example of a display device for a vehicle includes a video device for a vehicle that is disclosed in Korean Patent Publication No. 10-2018-0004633 A (published on January 12, 2018), which includes a display that displays an image using data received wiredly or wirelessly from a mobile terminal or a micro controller unit (MCU) of the vehicle; a transparent prism which is seated on one surface of the display and transmits or reflects an image emitted from the display; and a casing on which the display and the transparent prism are seated.

### DISCLOSURE OF THE INVENTION

### TECHNICAL PROBLEM

The present embodiment provides a display device for a vehicle, which is capable of providing two displays with a simple structure.

### TECHNICAL SOLUTION

A display device for a vehicle according to the present embodiment may include a display module provided with a display panel and a cover window disposed on one surface of the display panel, and a drive mechanism configured to lay down the display module or stand up the display module.

The cover window may include a total reflection area on which an image emitted from the display panel is totally reflected, and a transmission area on which the image emitted from the display panel is transmitted.

A surface area of the total reflection area may be less than that of the transmission area.

The drive mechanism may be performed in a plurality of modes.

The plurality of modes may include a first mode in which an emission surface of the total reflection area faces backward, and a second mode in which an emission surface of the transmission area faces backward.

In the first mode, the emission surface of the transmission area may face upward.

In the second mode, the emission surface of the total reflection area may face downward.

The cover window may include: a flat plate portion comprising the transmission area; and a prism portion disposed on one end of the flat plate portion and comprising the total reflection area.

The display module may further include a cover decoration disposed on the cover window.

The drive mechanism may be connected to the cover decoration.

An example of the drive mechanism may include a rotary motor configured to rotate the cover decoration.

Another example of the drive mechanism may include: a rotary motor connected to a rotation shaft disposed on the cover decoration; a bearing through which the rotation shaft passes; a pinion to which an outer circumference of the bearing is fixed; a rack with which the pinion is engaged; a moving drive gear engaged with the pinion; and a moving motor connected to the moving drive gear.

The moving drive gear may be spaced apart from the rack in a vertical direction.

The cover window may include: a flat plate portion; a prism portion that is thicker than the flat plate portion; and a connection body configured to connect the flat plate portion to the prism portion.

The connection body may include a multi-link in which a plurality of unit links are sequentially connected in a row.

The display panel may include a flexible display panel.

The display panel may include: a first panel facing the total reflection area; and a second panel facing the transmission area.

### ADVANTAGEOUS EFFECTS

According to the present embodiment, the convenience may be improved by providing the two screens having the different sizes with one display device for the vehicle.

In addition, when the vehicle is in the normal driving, the display device for the vehicle may display the small screen having the small size, and when the vehicle is stopped or driving autonomously, the display device for the vehicle may display the main screen having the large size, and thus, the frequency of use and the utilization of the display device for the vehicle may be high.

In addition, the small screen having the small size and the large screen that is visible through the windshield may be provided through one display device to improve the utilization and minimize the number of display devices installed in the vehicle.

### BRIEF DESCRIPTION OF THE DRAWINGS

FIG. 1 is a side view when an example of a display device for a vehicle is a small display according to the present embodiment,
FIG. 2 is a perspective view when the example of the display device for the vehicle is the small display according to the present embodiment,
FIG. 3 is a side view when an example of the display device for the vehicle is a main display according to the present embodiment,
FIG. 4 is a perspective view when the example of the display device for the vehicle is the main display according to the present embodiment,
FIG. 5 is a perspective view illustrating an example of a cover window according to the present embodiment,
FIG. 6 is an enlarged cross-sectional view illustrating various examples of the cover window according to the present embodiment,
FIG. 7 is a cross-sectional view illustrating various examples of a prism portion according to the present embodiment,
FIG. 8 is a side view illustrating a modified example of the example of the display device for the vehicle according to the present embodiment,
FIG. 9 is a perspective view the modified example of the example of the display device for the vehicle according to the present embodiment,
FIG. 10 is a side view illustrating an example in which a display module of another example of the display device for the vehicle slidably moves and rotates according to the present embodiment,
FIG. 11 is a perspective view of a drive mechanism as another example of the display device for the vehicle according to the present embodiment,
FIG. 12 is a control block diagram illustrating another example of the display device for the vehicle according to the present embodiment,
FIG. 13 is a side view illustrating further another example of the display device for the vehicle according to the present embodiment,
FIG. 14 is a side view illustrating a state in which the display device for the vehicle or another example of the display module varies according to the present embodiment, and
FIG. 15 is a side view illustrating a modified example of the example of the display device for the vehicle according to the present embodiment.

### MODE FOR CARRYING OUT THE INVENTION

Hereinafter, detailed embodiments will be described in detail with reference to the accompanying drawings.

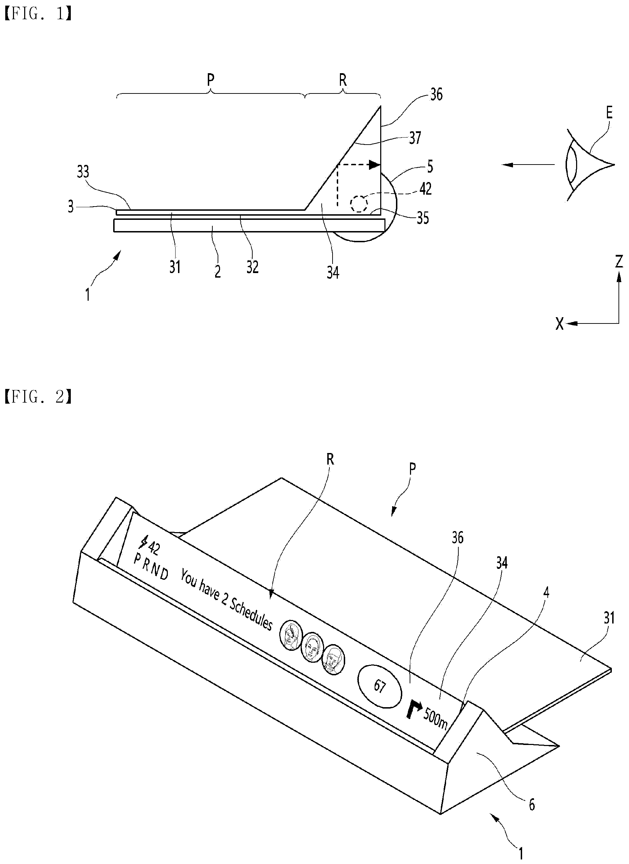

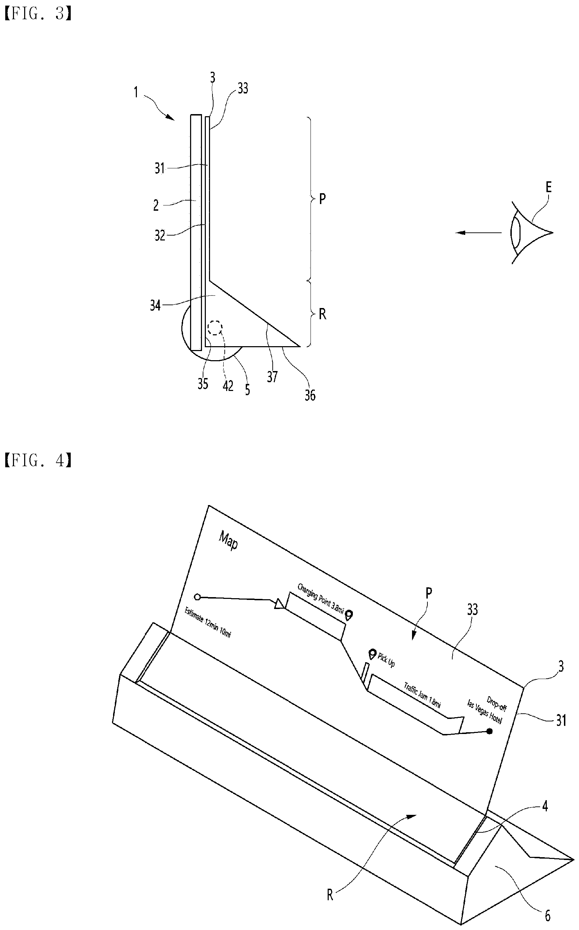

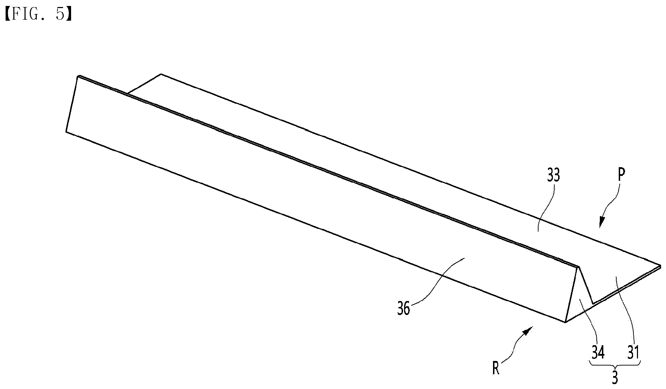

FIG. 1 is a side view when an example of a display device for a vehicle is a small display according to the present embodiment, FIG. 2 is a perspective view when the example of the display device for the vehicle is the small display according to the present embodiment, FIG. 3 is a side view when an example of the display device for the vehicle is a main display according to the present embodiment, FIG. 4 is a perspective view when the example of the display device for the vehicle is the main display according to the present embodiment, and FIG. 5 is a perspective view illustrating an example of a cover window according to the present embodiment.

An example of a display device for a vehicle may include a display module 1.

The display module 1 may include a display panel 2 and a cover window 3.

The display panel 2 may be a liquid crystal display (LCD) or an organic light emitting diode (OLED). The type of display panel 2 is not limited, and various types may be applied.

The cover window 3 may be disposed on one surface of the display panel 2.

As illustrated in FIG. 1, when the display panel 2 lays down, the cover window 3 may be disposed on a top surface of the display panel 2.

As illustrated in FIG. 3, when the display panel 2 stands up, the cover window 3 may be disposed on a rear surface of the display panel 2.

The cover window 3 may include a total reflection area R and a transmission area P.

The cover window 3 may lay down or stand up together with the display panel 2.

The total reflection area R may be an area on which an image emitted from the display panel 2 is totally reflected when the cover window 3 lays down, as illustrated in FIGS. 1 and 2.

The transmission area P may be an area through which the image emitted from the display panel 2 is transmitted when the cover window 3 stands up, as illustrated in FIGS. 3 and 4.

As illustrated in FIG. 1, when the cover window 3 lays down, the total reflection area R may be disposed in a row in a forward and backward direction X. When the cover window 3 lays down, the transmission area P may be disposed in front of the total reflection area R, and the total reflection area R may be disposed behind the transmission area P, as illustrated in FIG. 1.

As illustrated in FIG. 3, when the cover window 3 stands up, the total reflection area R may be disposed in a row in a vertical direction Z. When the cover window 3 stands up, the transmission area P may be disposed above the total reflection area R, and the total reflection area R may be disposed below the transmission area P, as illustrated in FIG. 3.

The image emitted from the display panel 2 may be totally reflected backward by the total reflection area R. As illustrated in FIGS. 1 and 2, when the cover window 3 lays down, the total reflection area R may provide a screen to a driver E (eye box) riding in the vehicle.

The image emitted from the display panel 2 may be emitted backward through the transmission area P. As illustrated in FIGS. 3 and 4, when the cover window 3 stands up, the transmission area P may provide a screen to the driver E (eye box) riding in the vehicle.

A surface area of the total reflection area R may be less than that of the transmission area P.

The display module 1 may provide a small display or server screen, which has a small size and has a total reflection area R facing backward when the cover window 3 lays down as illustrated in FIGS. 1 and 2.

The display module 1 may have a main display or large screen, which has a large size and has a transmission area P facing backward when the cover window 3 lays down as illustrated in FIGS. 3 and 4.

The cover window 3 may include a flat plate portion 31 and a prism portion 34.

The flat plate portion 31 may include a transmission area P.

As illustrated in FIGS. 3 and 4, the flat plate portion 31 may have a front surface as an incident surface 32 and a rear surface as an emission surface 33 when the cover window 3 stands up.

The flat plate portion 31 may emit the image incident from the front to the rear when the cover window 3 stands up.

The prism portion 34 may be disposed on one end of the flat plate portion 31. The prism portion 34 may be disposed on a rear end of the flat plate portion 31 when the cover window 3 lays down. The prism portion 34 may be disposed on a lower end of the flat plate portion 31 when the cover window stands up.

The prism portion 34 may include a total reflection area R.

As illustrated in FIGS. 1 and 2, the prism portion 34 may have a bottom surface as an incident surface 35, and a rear surface an emission surface 36 when the cover window 3 lays down. The prism portion 34 may include an inclined surface when the cover window 3 lays down and may be a total reflection surface 37 that totally reflects the image backward.

The prism portion 34 may reflect the image, which is incident from the lower side, backward from the total reflection surface 37when the cover window 3 lays down and may reflect the image, which is reflected from the total reflection surface 37, backward.

A material of the cover window 3 having the prism portion 34 may be a transparent ceramic series (glass, quartz, etc.) or a transparent polymer series (acrylic, PS, epoxy, PC, etc.).

The prism portion 34 may not undergo any separate surface treatment applied to the total reflection surface 37 and may also undergo surface treatment applied to the total reflection surface 37 such as deposition or printing to improve brightness, etc.

The display module 1 may further include a cover decoration 4 as illustrated in FIGS. 3 and 4.

The cover decoration 4 may be disposed on the cover window 3. The cover decoration 4 may surround an edge of the cover window 3. The cover decoration 4 may be coupled to at least one of the display panel 2 or the cover window 3, and may be integrated with the display panel 2 and the cover window 3. The display panel 2 and the cover window 3 may be coupled by the cover window 3.

The cover decoration 4 may surround both left and right ends of the flat plate 31.

The cover decoration 4 may surround both left and right ends of the prism portion 34.

An example of the display device for the vehicle may further include a display module 1, particularly a drive mechanism 5 that lays down or stand up the display panel 2 and window 3.

A first position at which the display module 1 lays down may be defined as a position at which the display module 1 is disposed horizontally or a position at which the display module 1 is disposed to be inclined close to a horizontal plane.

A second position at which the display module 1 stands up may be defined as a position where the display module 1 is disposed vertically or a position at which the display module 1 is disposed to be inclined close to the vertical plane.

An example of a drive mechanism 5 may be a rotary mechanism that rotates the display module 1 around a rotation shaft 42.

The drive mechanism 5 may be connected to the cover decoration 4 and may rotate the cover decoration 4, and the display panel 2 and the cover window 3 may rotate together with the cover decoration 4.

An example of the drive mechanism 5 may be a rotary motor that rotates the cover decoration 4.

The rotation shaft 42 may be disposed at one of left and right sides of the cover decoration 4. The rotation shaft 42 may be disposed to protrude from a side surface of the cover decoration 4.

The rotary motor, which is the drive mechanism 5, may be disposed next to the cover decoration 4 and connected to a rotation shaft 42 to rotate the cover decoration 4.

An example of the display device for the vehicle may further include a mounter 6 mounted on the vehicle. The rotary motor may be disposed on the mounter 6 and supported by the mounter 6.

The drive mechanism 5 may perform a plurality of modes. The plurality of modes may include a first mode and a second mode.

The first mode may be a mode in which the display panel 2 and the cover window 3 lay down as illustrated in FIGS. 1 and 2. The first mode may be a mode in which the emission surface 36 of the total reflection area R faces backward. The first mode may be a mode in which the emission surface 33 of the transmission area R faces upward.

In the first mode of the drive mechanism 5, the display panel 2 may emit image light onto the total reflection area R, and the image light emitted from the display panel 2 may be totally reflected by the total reflection surface 37 and then emitted backward.

The second mode may be a mode in which the display panel 2 and the cover window 3 stand up as illustrated in FIGS. 3 and 4. The second mode may be a mode in which the emission surface of the transmission area R faces backward. The second mode may be a mode in which the emission surface of the total reflection area R faces downward.

In the second mode of the drive mechanism 5, the display panel 2 may emit image light onto the transmission area P, and the image light emitted from the display panel 2 may be transmitted through the emission surface 33 and then emitted backward.

An example of the display device for the vehicle may further include a controller that controls the rotary motor.

The controller may control the display panel 2 and the drive mechanism 5 in different modes depending on the vehicle's driving mode (stop, low-speed driving, high-speed driving, etc.).

The display panel 2 may display vehicle driving information such as P (parking), R (reverse), N (neutral), and D (drive).

The display panel 2 may display schedule information such as reservation information.

The display panel 2 may display vehicle's speed information in numerical form, etc.

The display panel 2 may include direction information such as left turn, right turn, and straight ahead, as well as distance information.

The display panel 2 may display map information such as a vehicle's final destination or an altitude change to a final destination.

The display panel 2 may display vehicle driving information, schedule information, vehicle speed information, direction information, distance information, etc., and image light including vehicle driving information, schedule information, vehicle speed information, direction information, distance information, etc. may be directed backward through the total reflection area R when the cover window 3 lays down, as illustrated in FIG. 2.

The display panel 2 may display map information, etc., and image light including map information, etc. may be directed backward through the transmission area P while the cover window 3 stands up, as illustrated in FIG. 4.

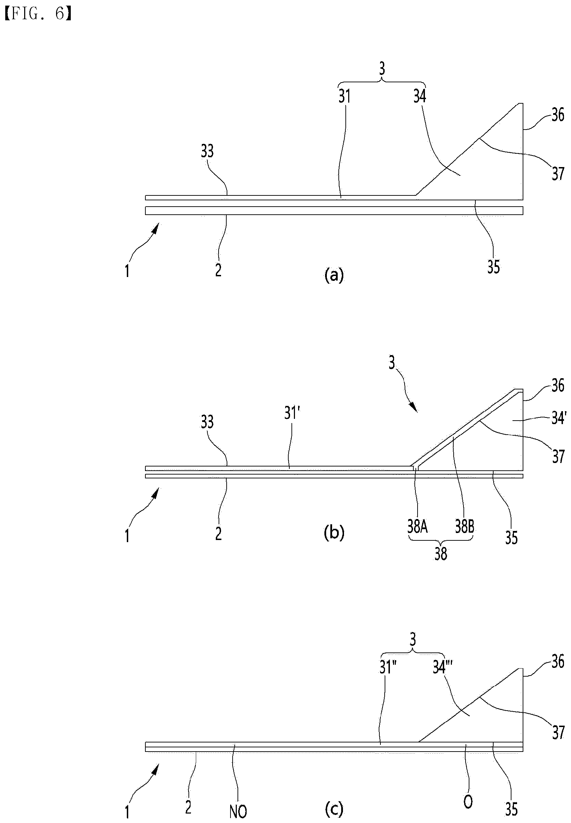

FIG. 6 is an enlarged cross-sectional view illustrating various examples of the cover window according to the present embodiment.

In an example of the cover window 3, as illustrated (a) of FIG. 6, a flat plate portion 31 and a prism portion 34 may be integrated with each other, and the prism portion 34 may be thicker than the flat plate portion 31.

Another example of the cover window 3 may include, as illustrated (b) of FIG. 6, a flat plate portion 31', a prism portion 34', and a connection body 38, and the prism portion 34' may be thicker than the flat plate portion 31'.

The connection body 38 may connect the flat plate portion 31' to the prism portion 34'. The flat plate portion 31' and the prism portion 34' may be manufactured separately and connected by the connection body 38.

The connection body 38 may be connected to one end of the flat plate portion 31' and may cover one surface of the prism portion 34'.

The connection body 38 may include a boundary part 38A disposed between the flat plate portion 31' and the prism portion 34', and a cover portion 38B extending from the boundary part 38A to cover one surface of the prism portion 34'.

Another example of a cover window 3 may include a flat plate portion 31" and a prism portion 34", as illustrated in (c) of FIG. 6, and the prism portion 34" may be attached to one surface of the flat portion 3", and the prism portion 34" may be thicker than the flat plate portion 31".

An incident surface 35 of the prism portion 34" may be attached to one surface of the flat plate portion 31" by an adhesive means such as a transparent adhesive.

The flat plate portion 31" may include an overlapping area O and a non-overlapping area NO.

The overlapping area O may be disposed between the display panel 2 and the prism portion 34" and may be an area overlapping each of the display panel 2 and the prism portion 34".

The non-overlapping area NO may be an area that overlaps the display panel 2 and does not overlap the prism portion 34".

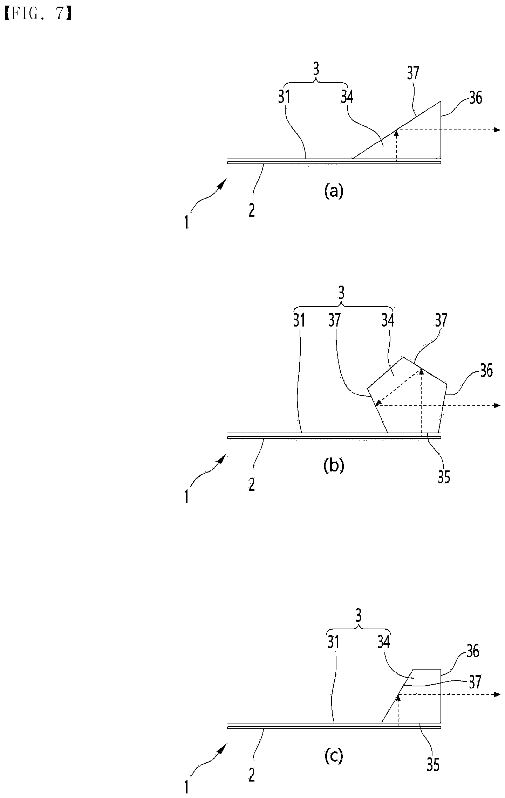

FIG. 7 is a cross-sectional view illustrating various examples of the prism portion according to the present embodiment,

An example of the prism portion 34 may be configured as a right-angle prism that internally totally reflects image light at a right angle, as illustrated in (a) of FIG. 7.

Another example of the prism portion 34 may be configured as a penta prism that internally totally reflects image light plurality of times, as illustrated in (b) of FIG. 7.

Further another example of the prism portion 34 may be a dove prism used to invert the top and bottom of an image, as illustrated in (c) of FIG. 7.

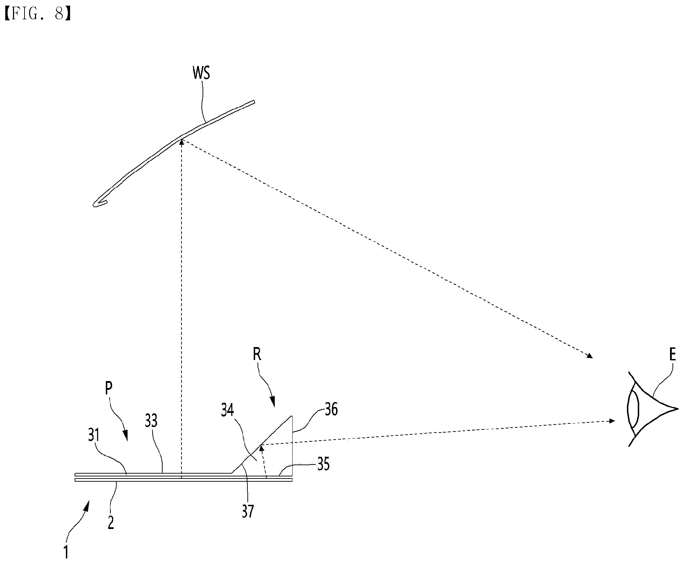

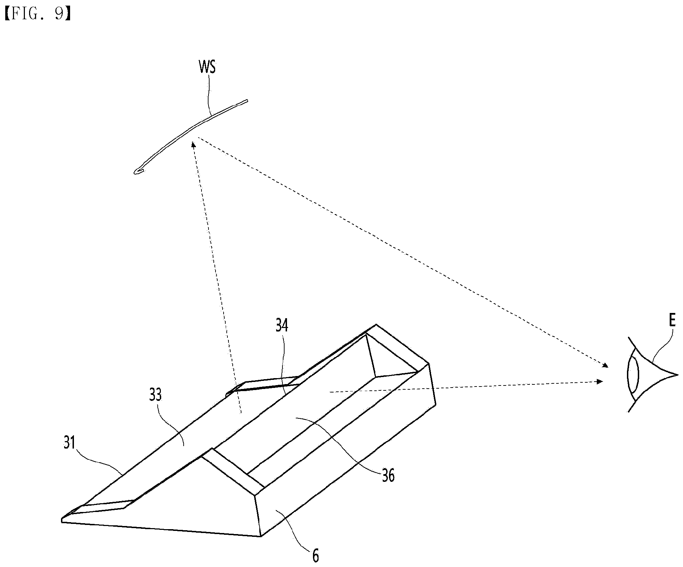

FIG. 8 is a side view illustrating a modified example of the example of the display device for the vehicle according to the present embodiment. FIG. 9 is a perspective view of the modified example of the example of the display device for the vehicle according to the present embodiment.

In one example of the modified example of the display device for the vehicle, as illustrated in FIGS. 8 and 9, when the cover window 3 lays down, the display panel 2 may display information, and the display panel 2 may emit image light to the flat plate portion 31 and the prism portion 34.

The image light emitted from the flat plate portion 31 may be directed upward after passing through the flat plate portion 31 and may be directed toward a windshield WS of the vehicle. The display panel 2 may be used as a light source for a head-up display HUD, and a user E may recognize a virtual image formed in front of the windshield WS and a screen of the main display.

The image light emitted from the prism portion 34 may be emitted backward after being totally reflected by the prism portion 34, and the user E may recognize the screen of the small display expressed through the prism portion 34.

In the first mode of the drive mechanism 5, the display panel 2 may emit image light onto the total reflection area R and the transmission area P, and the image light emitted from the display panel 2 onto the total reflection area R may be totally reflected from the total reflection surface 37 and then emitted backward, and also, the image light emitted from the display panel 2 onto the transmission area P may be directed toward the wind shield WS after being transmitted through the transmission area 33.

The modified example of the example of the display device for the vehicle may be the same as or similar to the example of the display device for the vehicle in terms of its configuration and operation, except that the display panel 2 emits image light onto the total reflection area R and the transmission area P in the first mode of the drive mechanism 5, and thus, the same symbols are used, and detailed descriptions thereof will be omitted.

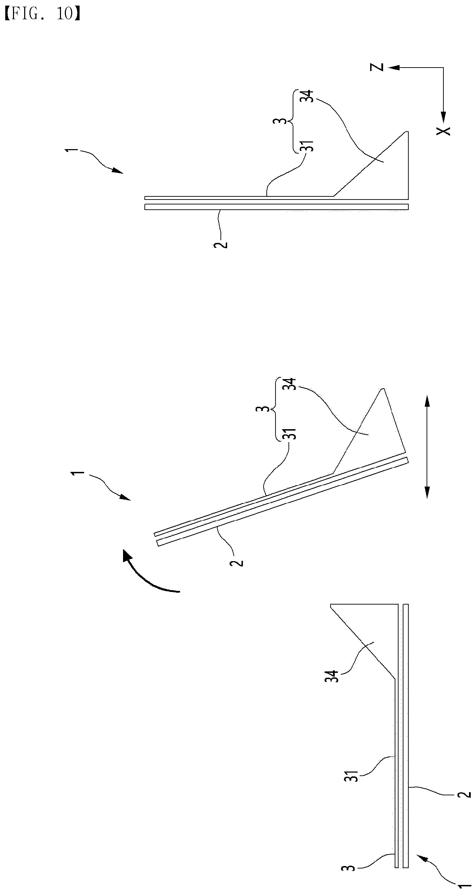

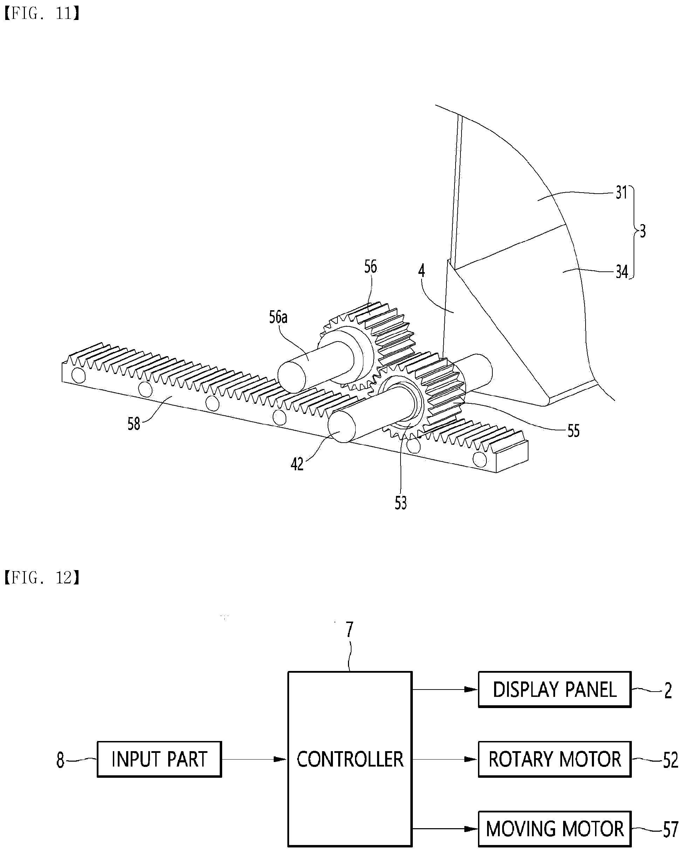

FIG. 10 is a side view illustrating an example in which a display module of another example of the display device for the vehicle slidably moves and rotates according to the present embodiment, FIG. 11 is a perspective view of a drive mechanism as another example of the display device for the vehicle according to the present embodiment, and FIG. 12 is a control block diagram illustrating another example of the display device for the vehicle according to the present embodiment.

Another example of a drive mechanism 5' may rotate the display module 1 as well as move the display module 1 linearly.

The drive mechanism 5' may slide the display module 1 in a forward and backward direction X after rotating the display module 1, may slide the display module 1 in the forward and backward direction X to rotate the display module 1, and may rotate the display module 1 to slide the display module 1 in the forward and backward direction X.

The drive mechanism 5' may be a rotary mechanism 52 connected to a rotation shaft 42 disposed on a cover decoration 4. An example of the rotary mechanism 52 may be a rotary motor 52 connected to the rotation shaft 42, and thus, the rotary mechanism 52 and the rotary motor 52 may be described by using the same symbol.

The rotary motor 52 may be connected to the rotation shaft 42 to rotate the rotation shaft 42. When the rotary motor 52 is driven, the display module 1 may be rotated around the rotation shaft 42.

The drive mechanism 5' may include a moving mechanism that moves the rotation shaft 42 linearly.

An example of the moving mechanism may include a bearing 53 through which the rotation shaft 42 passes, a pinion 55 to which an outer circumference of the bearing 53 is fixed, a moving drive gear 56 engaged with the pinion 55, a moving motor 57 connected to the moving drive gear 56, and a rack 58 engaged with the pinion 55.

An example of the bearing 53 may be a ball bearing, and the bearing 53 may include an inner ring, an outer ring, and a plurality of balls disposed between the inner ring and the outer ring. An inner circumference of the inner ring may be an inner circumference of the bearing 53, and an outer circumference of the outer ring may be an outer circumference of the bearing 53.

The rotation shaft 42 may pass through the inner ring of the bearing 53. An outer circumference of the rotation shaft 42 may be fixed to be in close contact with the inner circumference of the inner ring of the bearing 53.

The bearing 53 may be disposed inside the pinion 55. The outer ring of the bearing 53 may be fixed to the inner circumference of the pinion 55.

The pinion 55 may be a bearing-fixed gear to which the bearing 53 is fixed. The pinion 55 may be a hollow. An inner circumference of the pinion 55 may be coupled to the outer circumference of the bearing 53, especially the outer circumference of the outer ring. A gear that is engaged with the gear of the rack 58 may be disposed on the outer circumference of the pinion 55. The gear disposed on the outer circumference of the pinion 55 may be engaged with the gear disposed on the outer circumference of the moving drive gear 56.

The moving drive gear 56 may be spaced apart from the rack 58 in a vertical direction Z at an upper side of the rack 58 and may rotate the pinion 55.

The moving drive gear 56 may rotate around the drive shaft 56a. The drive shaft 56a may be integrated with the moving drive gear 56 or connected to a rotation center of the moving drive gear 56.

The moving motor 57 may be connected to the drive shaft 56a to rotate the moving driving gear 56.

The rack 58 may be disposed lengthily in the forward and backward direction X on the vehicle or mounter 6 and may be provided with a gear on a top surface thereof.

The rotation shaft 42 may be perpendicular to a longitudinal direction of the rack 58, and a portion of the rotation shaft 42 may extend upward toward the rack 58.

A drive mechanism 5' may include a motor mounter (not shown) on which a rotary motor 52 and a moving motor 57 are installed. The motor mounter may be supported on the mounter 6 and may move linearly together with the pinion 55 when the pinion 55 moves linearly.

When the moving motor 57 is driven, the moving drive gear 56 may rotate to rotate the pinion 55, the pinion 55 may move linearly in the forward and backward direction X along the rack 58, and the rotation shaft 42 passing through the bearing 53 may move linearly together with the pinion 56. The rotation shaft 42 may move linearly along the rack 58 in the longitudinal direction of the rack 58, and the display module 1 may move linearly along the rack 58.

The controller 7 may control the display panel 2, the rotary motor 52, and the moving motor 57.

An example of the controller 7 may control the display panel 2, the rotary motor 52, and the moving motor 57 according to an input from an input unit 8 that receives a user's command.

Another example of the controller 7 may receive a signal from a vehicle's microcomputer and may control the display panel 2, the rotary motor 52, and the moving motor 57 according to a command transmitted from the vehicle's microcomputer.

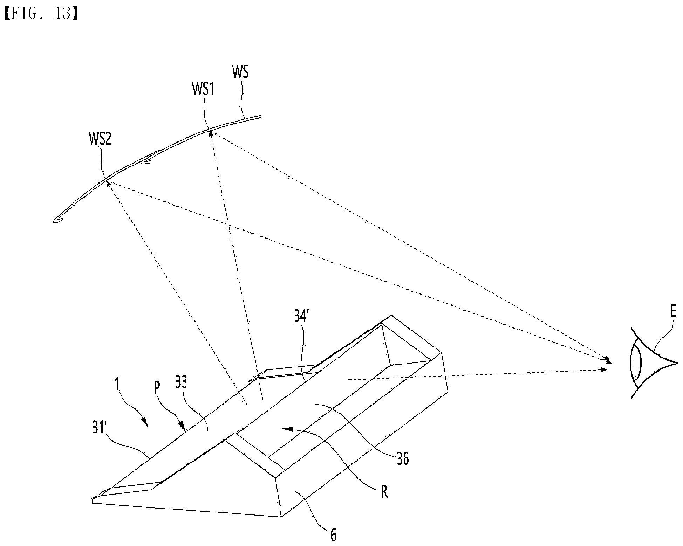

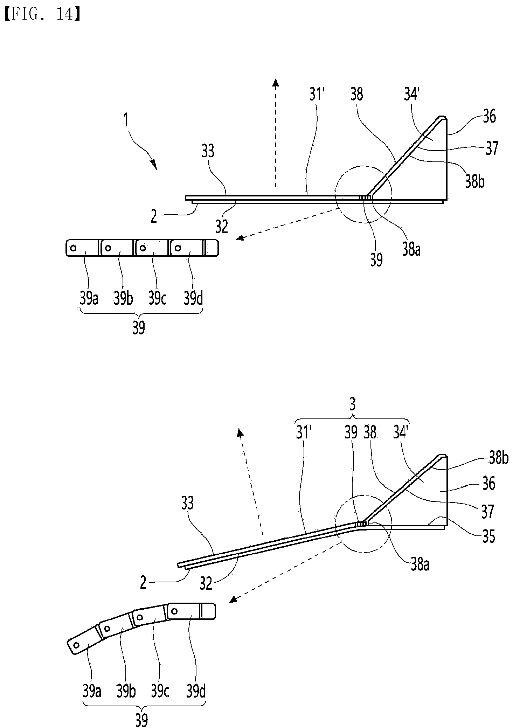

FIG. 13 is a side view illustrating further another example of the display device for the vehicle according to the present embodiment, and FIG. 14 is a side view illustrating a state in which the display device for the vehicle or another example of the display module varies according to the present embodiment.

In further another example of the display device for the vehicle, the display panel 2 may be a flexible display panel, and the cover window 3 may be bendable or foldable.

The cover window 3 may include a flat plate portion 31', a prism portion 34' that is thicker than the flat plate portion 31', and a connection body 38 connecting the flat plate portion 31' to the prism portion 34', and the connection body 38 may include a multi-link 39.

The cover window 3 may be similar to the cover window illustrated in (b) of FIG. 6, and the connection body 38 may include a boundary part 38A and a cover portion 38B, and may further include a multi-section link 39.

The multi-link 39 may be connected to each of the flat plate portion 31' and the boundary part 38A.

The multi-link 39 may include a plurality of unit links 39a, 39b, 39c, and 39d sequentially connected in a row.

One of the plurality of unit links 39a, 39b, 39c, and 39d may be connected to the flat plate 31', and another of the plurality of unit links 39a, 39b, 39c, and 39d may be connected to the boundary part 38A.

Further another example of the display device for the vehicle may further include a tilting mechanism (not shown).

The tilting mechanism may be connected to the flat plate portion 31' or to an area of the display panel 2 facing the flat plate portion 31'. An example of the tilting mechanism may include a tilting driving source such as a tilting motor connected to an area of the flat plate portion 31' or display panel 2, which faces the flat plate portion 31'.

The tilting mechanism may rotate the flat plate 31' horizontally, as illustrated in (a) of FIG. 14, and may rotate the flat plate 31' to be inclined with respect to a horizontal plane, as illustrated in (b) of FIG. 14.

In further another example of the display device for the vehicle, as the flat plate portion 31' is tilted, image light may be emitted to a plurality of points WS1 and WS2 of the windshield WS, as illustrated in FIG. 13.

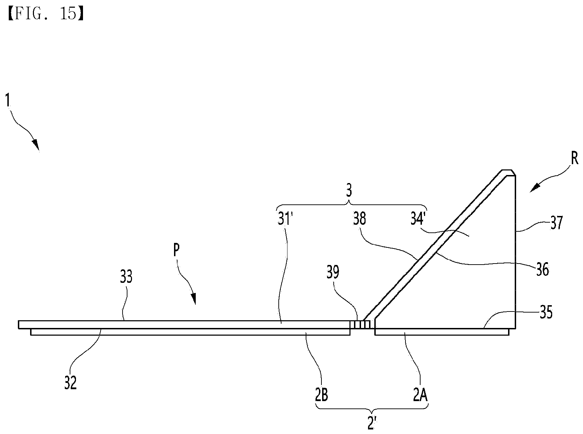

FIG. 15 is a side view illustrating a modified example of the example of the display device for the vehicle according to the present embodiment.

A modified example of the display device for the vehicle may include a first panel 2A facing the total reflection area R and a second panel facing the transmission area P.

Each of the first panel 2A and the second panel 2B may be a liquid crystal display (LCD) or an organic light emitting diode (OLED). The type of display panel 2 is not limited, and various types may be applied.

The first panel 2A and the second panel 2B may operate independently of each other and may operate to display different information.

The first panel 2A and the second panel 2B may be coupled to the cover window 3 illustrated in (a) of FIG. 6, may be coupled to the cover window 3 illustrated in (b) of FIG. 6, may be coupled to the cover window 3 illustrated in (c) of FIG. 6, and may be coupled to the cover window 3 illustrated in FIG. 14.

The first panel 2A and the second panel 2B may be coupled to the cover window 3 while being spaced apart from each other.

The first panel 2A may face an incident surface 36 of each of the prism portions 34 and 34', and the second panel 2B may face an incident surface 32 of the flat plate portions 31 and 31'.

A modified example of the display device for the vehicle may be the same as or similar to the example of the display device for the vehicle or further another example of the display device for the vehicle in other configurations or operations except for the display panel 2', and hereinafter, to avoid duplicated descriptions, the same symbols are used, and detailed descriptions thereof will be omitted.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being included in the present invention.

## Claims

1. A display device for a vehicle, comprising:
a display module provided with a display panel and a cover window disposed on one surface of the display panel; and
a drive mechanism configured to lay down the display module or stand up the display module,
wherein the cover window comprises:
a total reflection area on which an image emitted from the display panel is totally reflected; and
a transmission area on which the image emitted from the display panel is transmitted.

2. The display device according to claim 1, wherein a surface area of the total reflection area is less than a surface area of the transmission area.

3. The display device according to claim 1, wherein the drive mechanism is performed in a plurality of modes,
wherein the plurality of modes comprises:
a first mode in which an emission surface of the total reflection area faces backward; and
a second mode in which an emission surface of the transmission area faces backward.

4. The display device according to claim 3, wherein, in the first mode, the emission surface of the transmission area faces upward, and
in the second mode, the emission surface of the total reflection area faces downward.

5. The display device according to claim 1, wherein the cover window comprises:
a flat plate portion comprising the transmission area; and
a prism portion disposed on one end of the flat plate portion and comprising the total reflection area.

6. The display device according to claim 1, wherein the display module further comprises a cover decoration disposed on the cover window,
wherein the drive mechanism is connected to the cover decoration.

7. The display device according to claim 1, wherein the drive mechanism comprises a rotary motor configured to rotate the cover decoration.

8. The display device according to claim 1, wherein the drive mechanism comprises:
a rotary motor connected to a rotation shaft disposed on the cover decoration;
a bearing through which the rotation shaft passes;
a pinion to which an outer circumference of the bearing is fixed;
a rack with which the pinion is engaged;
a moving drive gear engaged with the pinion; and
a moving motor connected to the moving drive gear.

9. The display device according to claim 8, wherein the moving drive gear is spaced apart from the rack in a vertical direction.

10. The display device according to claim 1, wherein the cover window comprises:
a flat plate portion;
a prism portion that is thicker than the flat plate portion; and
a connection body configured to connect the flat plate portion to the prism portion.

11. The display device according to claim 10, wherein the connection body comprises a multi-link in which a plurality of unit links are sequentially connected in a row.

12. The display device according to claim 10, wherein the display panel comprises a flexible display panel.

13. The display device according to claim 1, wherein the display panel comprises:
a first panel facing the total reflection area; and
a second panel facing the transmission area.
